# EUROPÄISCHE PATENTSCHRIFT

(11) **EP 2 138 268 B1**
(45) Veröffentlichungstag und Bekanntmachung des Hinweises auf die Patenterteilung: **02.11.2016**
(21) Anmeldenummer: 09008191.0
(22) Anmeldetag: 23.06.2009
(51) Int. Cl.: B23Q 11/10, F01M 11/08, F01M 13/04, F01P 3/22, F01P 11/02, C02F 1/20, F16N 39/00, B01D 19/00

(54) **Einrichtung zum Absondern gasartiger Bestandteile, insbesondere von Luft, aus flüssigen Betriebsmedien**
Device for isolating gaseous components, in particular of air, from liquid operating media
Dispositif d'isolation d'éléments constitutifs de type gazeux, notamment d'air, à partir de milieux de fonctionnement liquides

(30) Priorität: 27.06.2008 DE 102008030714
(43) Veröffentlichungstag der Anmeldung: 30.12.2009
(73) Patentinhaber: Hydac Cooling GmbH, 66280 Sulzbach/Saar (DE)
(72) Erfinder: Welsch, Andreas, 66740 Saarlouis (DE)
(74) Vertreter: Bartels & Partner

(56) Entgegenhaltungen:
- GB-A- 1 339 825
- GB-A- 2 260 581
- GB-A- 191 507 336
- US-A- 2 755 888

## Beschreibung

Die Erfindung betrifft eine Einrichtung zum Absondern gasartiger Bestandteile, insbesondere von Luft, aus flüssigen Betriebsmedien in Fluidsystemen, mit einem Leitungssystem, das einen Vorratstank und eine Fördereinrichtung zum Abführen entgasten Betriebsmediums aus dem Tank und zum Rückführen von gasartige Bestandteile enthaltendem Mediengemisch zum Tank aufweist, wobei eine vom zum Tank zugeführten Mediengemisch durchströmbare Trenneinrichtung eine Entgasung bewirkt, wobei die Trenneinrichtung eine Kammer für das Mediengemisch aufweist, die stromaufwärts des Tanks angeordnet ist, dass die Kammer an ihrem Boden, an dem sich das entgaste Medium ansammelt, einen Ausgang aufweist, der mit dem Tank über einen Siphon verbunden ist, der in der Kammer einen oberhalb des bodenseitigen Ausgangs gelegenen Pegel des entgasten Mediums aufrecht erhält, dass die Austrittsmündung des Siphons in einen fluidfreien Raum innerhalb des Tanks ausmündet, und dass die maximale Füllstandshöhe im Tank unterhalb der Austrittsmündung liegt.

Wenn Betriebsmedien, die Leitungssysteme durchströmen, mit gasartigen Bestandteilen, wie Luft, in Berührung kommen, so dass ein Mediengemisch gebildet wird, das z. B. mitgeführte Luft in einem Verhältnis von bis zu 1:10 enthält, dann ist es in den meisten Fällen zweckmäßig oder unumgänglich, gasartige Bestandteile abzusondern. Dies ist insbesondere dann wesentlich, wenn es sich um ein Zirkulationssystem handelt, bei dem Betriebsmedien in mehrmaligem Durchlauf zur Wirkung gebracht werden, wie dies beispielsweise bei Kühlkreisläufen der Fall ist. In solchen Fällen ist im Kreislaufsystem eine Trenneinrichtung, beispielsweise in Form eines Luftabscheiders für Kühlwasser, erforderlich.

Die GB 7336 offenbart eine Heizeinrichtung, die eine Entgasungseinrichtung aufweist. Es sind zwei kammerförmige Heizeinrichtungen vorgesehen. In der ersten, höher gelegenen Heizeinrichtung kann eine Entgasung erfolgen. Die erste Heizeinrichtung ist mit der zweiten, tiefer gelegenen Heizeinrichtung verbunden, wobei die Verbindung in einem Siphon in der zweiten Heizeinrichtung ausmündet.

Im Hinblick auf diese Erfordernisse liegt der Erfindung die Aufgabe zugrunde, eine Einrichtung zum Absondern gasartiger Bestandteile, beispielsweise von Luft, aus Flüssigkeiten zur Verfügung zu stellen, die sich durch einen besonders einfachen Aufbau auszeichnet.

Erfindungsgemäß ist diese Aufgabe durch eine Einrichtung gelöst, die die Merkmale des Patentanspruches 1 in seiner Gesamtheit aufweist.

Gemäß dem kennzeichnenden Teil des Anspruches 1 weist die die Entgasung bewirkende Trenneinrichtung eine Kammer auf, an deren Boden sich das entgaste Medium ansammelt, wobei eine wesentliche Besonderheit darin besteht, dass der Boden der Kammer einen Ausgang aufweist, der mit dem Tank über einen Siphon verbunden ist, wodurch sich die Möglichkeit eröffnet, mittels des Siphons innerhalb der Kammer einen gewünschten Pegelstand entgasten Mediums aufrecht zu erhalten. Auf einfachste Weise ergibt sich dadurch eine Selbststeuerung für den Rücklauf entgasten Mediums zum Tank, indem durch Wahl des Höhenniveaus des Austrittsendes des Siphons relativ zur Niveauhöhe des bodenseitigen Ausganges der Kammer eine Rückführung von Medium in den Tank nur in Abhängigkeit davon erfolgt, dass die Pegelhöhe in der Kammer dem Höhenniveau des Austrittes des Siphons entspricht. Das innerhalb des Siphons dauerhaft vorhandene Mediumvolumen bildet außerdem zwischen Tank und Trenneinrichtung einen Flüssigkeitsverschluss, der die gasbelastete Seite des Systems von der reinen Medienseite isoliert.

Die Austrittsmündung des Siphons befindet sich auf einem Höhenniveau, das gegenüber dem Höhenniveau des Randes des bodenseitigen Ausganges um eine vorgebbare Strecke nach oben versetzt ist.

In vorteilhafter Weise kann die Anordnung so getroffen sein, dass die Kammer an ihrem dem Ausgang entgegensetzten oberen Bereich einen Einlass für das Mediengemisch aufweist und dass die vertikale Erstreckung der Kammer so gewählt ist, dass zwischen dem Pegel des entgasten Mediums und dem Einlass für das eingeströmte Mediengemisch ein Beruhigungsbereich für die Abtrennung von Luft gebildet ist. Dank des durch den Siphon festgelegten Höchstpegels angesammelten Mediums in der Kammer ist auch bei sich ändernden Förderraten sichergestellt, dass die vertikale Erstreckung des Beruhigungsbereiches die gewählte Länge beibehält, die für die Trennung des Mediengemisches geeignet ist, beispielsweise für die Abscheidung von Luft.

Für das Abströmen der abgetrennten Luft aus der Kammer ist vorzugsweise am oberen Ende der Kammer eine Entlüftungsöffnung vorhanden.

Bei besonders vorteilhaften Ausführungsbeispielen ist die Entlüftungsöffnung in einem am oberen Ende der Kammer angeordneten Kammerdeckel vorgesehen, an dem eine Filtereinrichtung angeordnet ist, die von der Luft durchströmbar ist, die über die Entlüftungsöffnung austritt.

Diesbezüglich kann die Anordnung so getroffen sein, dass unmittelbar am Kammerdeckel eine Grobfiltereinrichtung vorhanden ist, die auch als Spritzschutz dient.

Ein besonders umweltfreundlicher Betrieb der Einrichtung ist gewährleistet, wenn oberhalb dieser ersten Filtereinrichtung eine eine feine Trennung von Flüssigkeit und austretender Luft bewirkende zweite Filtereinrichtung vorhanden ist, deren Reinseite einen Luftaustritt zur Umgebung bildet.

In besonders vorteilhafter Weise kann die Einrichtung mit ihrem Leitungssystem Bestandteil des Kühlsystems einer Maschinenanlage sein. Bei derartigen Kühlsystemen kann die Kühlflüssigkeit, beispielsweise Wasser mit Zusätzen von Frostschutz und Korrosionsschutzkonzentrat, an gewissen Stellen mit der Außenluft in Berührung kommen, wodurch Lufteinschlüsse mit der Kühlflüssigkeit mitgeführt werden. Dies kann beispielsweise eine Werkzeugmaschine betreffen, insbesondere in Form einer dahingehend eingesetzten Rotorkühlung. Die erfindungsgemäße Einrichtung gewährleistet nicht nur eine sichere Entgasung der Kühlflüssigkeit sondern auch eine besonders umweltfreundliche Abgabe der Abluft an die Umwelt.

Wenn eine derartige Maschinenanlage ein Dichtungssystem enthält, beispielsweise als Bestandteil einer Lageranordnung, die im Betrieb mit Sperrluft versorgt wird, kann bei der Erfindung die Anordnung vorzugsweise so getroffen sein, dass im Strömungsweg stromabwärts der zweiten Filtereinrichtung, die ein Feinfilter vor dem Luftaustritt zur Umgebung bildet, ein Anschluss vorgesehen ist, über den Sperrluft, die aus dem Dichtungssystem austritt, der zweiten Filtereinrichtung zuführbar ist. Somit ist sichergestellt, dass mittels der erfindungsgemäßen Einrichtung auch vermieden ist, dass ungereinigte Sperrluft an die Umwelt gelangen kann, was vermieden werden sollte, weil Sperrluft mit Betriebsmedien belastet sein kann, beispielsweise im Verhältnis etwa 100 : 1. Derart ist in vorteilhafter Weise ein Drainagesystem für Werkzeugmaschinen und vergleichbare Maschinenanlagen realisiert.

Bei besonders vorteilhaften Ausführungsbeispielen ist die Anordnung so getroffen, dass die Kammer am Tank derart angebaut ist, dass sie sich mit ihrem bodenseitigen Ausgang durch die Tankdecke ins Innere des Tanks erstreckt. Dies führt zu einer äußerst kompakten Bauweise, bei der der Siphon unmittelbar innerhalb des Tanks enthalten ist.

Entsprechend einer besonders vorteilhaften Bauweise sind auch weitere Komponenten des Kühlsystems, z. B. Pumpe der Fördereinrichtung, Wärmetauscher, Anzeige- und Überwachungseinrichtungen, Anschlusseinrichtungen und/oder dergleichen, auf dem Tank angebaut und mit diesem zu einer Baueinheit vereinigt. Dadurch ist ein einheitliches Kühlaggregat gebildet, das von einem eigenen, geeigneten Standort her über Verbindungsleitungen mit einer jeweils zugeordnetne Maschinenanlage verbindbar ist.

Nachstehend ist die Erfindung anhand eines in der Zeichnung dargestellten Ausführungsbeispieles im Einzelnen erläutert. Es zeigen:
- Fig. 1 eine schematisch vereinfacht dargestellte perspektivische Schrägansicht eines Kühlaggregates, versehen mit einem Ausführungsbeispiel der erfindungsgemäßen Einrichtung zum Absondern gasartiger Bestandteile, und
- Fig. 2 ein gegenüber Fig. 1 vergrößert gezeichneter Vertikalschnitt, der lediglich denjenigen Teilbereich von Fig. 1 zeigt, in dem das Ausführungsbeispiel der erfindungsgemäßen Einrichtung an den Tank des Kühlaggregates angebaut ist.

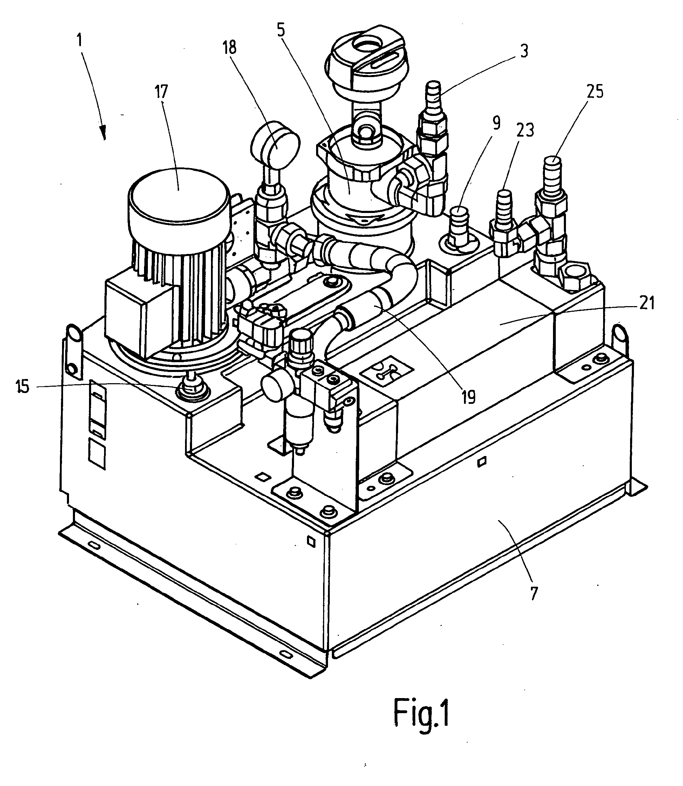

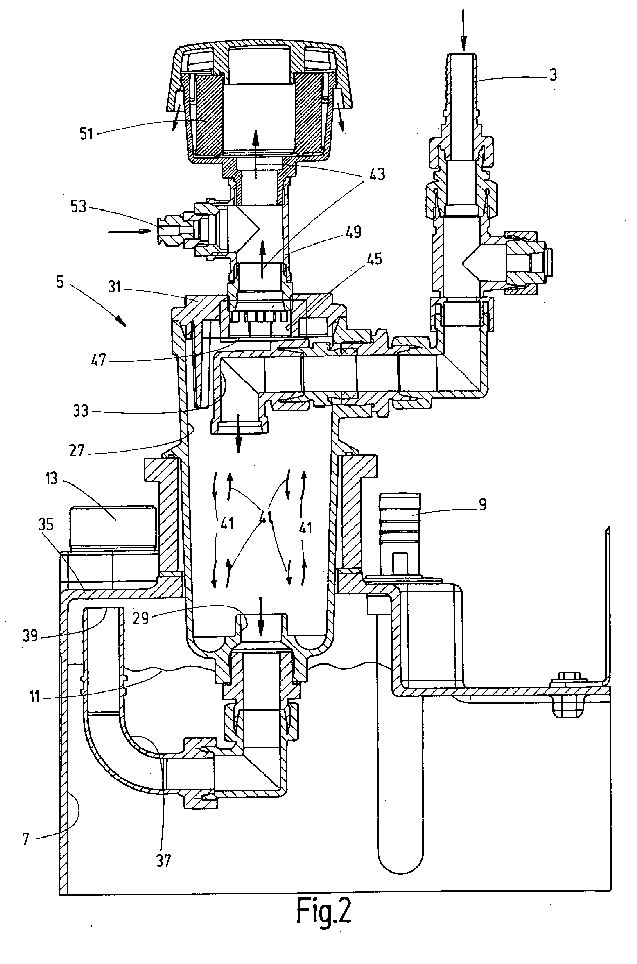

Nachstehend ist die Erfindung anhand eines Beispieles beschrieben, bei dem die erfindungsgemäße Einrichtung Bestandteil eines Kühlaggregates bildet, das in Fig. 1 als Ganzes mit 1 bezeichnet ist und das im praktischen Einsatz zur Kühlung einer Werkzeugmaschine vorgesehen ist. Genauer gesagt, handelt es sich um die Rotorkühlung sowie die Statorkühlung der-Werkzeugmaschine, wobei vom Rotor her warme, mit Lufteinschlüssen belastete Rücklauf-Kühlflüssigkeit über einen Anschluß 3 in das Aggregat 1 eintritt. Dieses Mediengemisch (Kühlflüssigkeit mit Lufteinschlüssen) durchläuft eine Trenneinrichtung 5, bevor sie in einen Ausgleichs- oder Vorratstank 7 gelangt. Von der warmen Seite des Stators rücklaufende Kühlflüssigkeit, die nicht mit Lufteinschlüssen belastet ist, tritt über einen Anschluß 9 in das Aggregat 1 ein und gelangt unmittelbar ins Innere des Tanks 7. In diesem befindet sich eine Vorrats- oder Ausgteichsmenge entgaster Kühlflüssigkeit, wobei die in Fig. 2 mit 11 bezeichnete Füllstandshöhe, eingebracht über einen Tankverschluß 13 mit Belüftung, durch einen Füllstandsanzeiger 15 überwacht ist.

Eine Tauchpumpe 17 fördert aus dem Tank 7 Kühlflüssigkeit über eine einen Manometer 18 enthaltende Leitung 19 zu einem Wärmetauscher 21, in dem mittels externer Kühlmittelzufuhr (nicht dargestellt) die zur Kühlung der Werkzeugmaschine erforderlich Wärmeabfuhr stattfindet. Aus dem Wärmetauscher 21 gelangt über Anschlüsse 23 und 25 die gekühlte Vorlaufflüssigkeit zum Rotor bzw. Stator.

Die Fig. 2 zeigt nähere Einzelheiten der Einrichtung zur Abscheidung von Luft aus dem über den Anschluß 3 zugeführten Mediengemisch. Wesentlicher Bestandteil der hierfür vorgesehenen Trenneinrichtung 5 ist eine Trennkammer 27, die sich entlang einer vertikalen Hochachse erstreckt, am Kammerboden einen Ausgang 29 besitzt und am entgegengesetzten, oberen Ende durch einen Kammerdeckel 31 abgeschlossen ist. Für das Einströmen des Mediengemisches vom Anschluß 3 her befindet sich in der Nähe des Kammerdeckels 31 ein Einlass 33.

Wie aus Fig. 2 ersichtlich ist, ist die Kammer 27 auf der Tankdeckwand 35 derart aufgebaut, dass sich der bodennahe Teilbereich der Kammer 27 durch eine Öffnung der Tankdeckwand 35 ins Innere des Tanks 7 erstreckt. An dem einen offenen Durchgang bildenden bodenseitigen Ausgang 29 der Kammer 27 schließt sich ein Siphon 37 allgemein üblicher Konfiguration an, der sich bei der in Fig. 2 verdeutlichten Bauweise zur Gänze innerhalb des Tanks 7 befindet. Dabei ist die Dimensionierung des Siphons 37 so gewählt, dass sich seine Austrittsmündung 39 auf einem Höhenniveau befindet, das gegenüber dem Höhenniveau des Randes des Ausganges 29 um eine Strecke nach oben versetzt ist. Diese Versetzung ist so gewählt, dass im Inneren der Kammer 27 oberhalb des bodenseitigen Ausganges 29 ein Pegel bestimmter, gewünschter Pegelhöhe des von Lufteinschlüssen freien, am Boden der Kammer 27 angesammelten Kühlwassers aufrecht erhalten bleibt. Der Zwischenraum zwischen dem durch den Siphon 37 festgelegten Flüssigkeitspegel und dem oberen Kammerdeckel 31 bildet einen Beruhigungsbereich für das zugeführte Mediengemisch, in dem es, wie in Fig. 2 mit Bogenpfeilen 41 versinnbildlicht, zur Absonderung der Lufteinschlüsse kommt. Für das Abströmen der abgesonderten Luft, wie mit Strömungspfeilen 43 angedeutet, befindet sich im oberen Kammerdeckel 31 eine Entlüftungsöffnung 45. Der Siphon 37 weist im wesentlichen eine U-Form auf, vorzugsweise aus bogenförmigen sowie geradlinigen Leitungsabschnitten zusammengesetzt, wobei zumindest im unteren Bereich der U-Form sich eine gewisse Fluidmenge im Sinne einer Barriere ansammelt.

Da die über die Öffnung 45 austretende Luft noch mit Flüssigkeitspartikeln belastet sein kann, ist, insbesondere aus Gründen des Umweltschutzes, Vorsorge getroffen, dass die Luft nicht unmittelbar zur Umgebung gelangen kann. Diesbezüglich befindet sich am Kammerdeckel 31 ein Vor- oder Grobfilter in Form eines Drahtgestrickes 47, das nicht nur eine grobe Trennung sondern auch einen Spritzschutz bewirkt. Stromaufwärts schließt sich ein Verbindungsrohr 49 an, über das die Luft zu einer feinen Filtereinrichtung 51 gelangt, die als feines Drahtgestrick gestaltet ist und von wo die fein gefilterte Luft an die Umgebung abströmen kann.

Am Verbindungsrohr 49 befindet sich ein Anschluß 53 als Dainageleitung, über den Sperrluft zugeführt werden kann, wenn in einer zugehörigen Maschinenanlage, beispielsweise Werkzeugmaschine, eine oder mehrere Dichtungsanordnungen vorhanden sind, die mit Sperrluft versorgt sind. Da aus solchen Dichtungsanordnungen austretende Sperrluft in geringen Mengenverhältnissen mit Betriebsmedien oder Partikeln belastet sein kann, ermöglicht es die bei der erfindungsgemäßen Einrichtung vorhandene Filteranordnung, dass die Sperrluft nicht unmittelbar zur Umgebung gelangt, sondern über das Verbindungsrohr 49 zum Feinfilter 51 gelangt, bevor der Austritt zur Umgebung erfolgt.

Während die Erfindung vorstehend am Beispiel des Einsatzes bei einem Kühlaggregat für Maschinenanlagen, wie Werkhzeugmaschinen, beschrieben ist, versteht sich, dass die Vorteile der Erfindung für die Absonderung gasartiger Bestandteile beliebiger, andersartiger Betriebsmedien nutzbar sind, bei denen eine Trennung betreffender Medien für die Absonderung gasartiger Einschlüsse durchzuführen ist.

## Patentansprüche

1. Einrichtung zum Absondern gasartiger Bestandteile, insbesondere von Luft, aus flüssigen Betriebsmedien in Fluidsystemen, mit einem Leitungssystem (1), das einen Vorratstank (7) und eine Fördereinrichtung (17) zum Abführen entgasten Betriebsmediums aus dem Tank (7) und zum Rückführen von gasartige Bestandteile enthaltendem Mediengemisch zum Tank (7) aufweist, wobei eine von dem zum Tank (7) zugeführten Mediengemisch durchströmbare Trenneinrichtung (5) eine Entgasung bewirkt, wobei die Trenneinrichtung (5) eine Kammer (27) für das Mediengemisch aufweist, die stromaufwärts des Tanks (7) angeordnet ist, wobei die Kammer (27) an ihrem Boden, an dem sich das entgaste Medium ansammelt, einen Ausgang (29) aufweist, der mit dem Tank (7) über einen Siphon (37) verbunden ist, der in der Kammer (27) einen oberhalb des bodenseitigen Ausgangs (29) gelegenen Pegel des entgasten Mediums aufrecht erhält, wobei die Austrittsmündung (39) des Siphons (37) in einen fluidfreien Raum innerhalb des Tanks (7) ausmündet, und wobei die maximale Füllstandshöhe (11) im Tank (7) unterhalb der Austrittsmündung (39) liegt, **dadurch gekennzeichnet, dass** sich die Austrittsmündung (39) auf einem Höhenniveau befindet, das gegenüber dem Höhenniveau des Randes des bodenseitigen Ausganges (29) um eine vorgebbare Strecke nach oben versetzt ist.

2. Einrichtung nach Anspruch 1, **dadurch gekennzeichnet, dass** die Kammer (27) an ihrem dem Ausgang (29) entgegensetzten oberen Bereich einen Einlass (33) für das Mediengemisch aufweist und dass die vertikale Erstreckung der Kammer (27) so gewählt ist, dass zwischen dem Pegel des entgasten Mediums und dem Einlass (33) für das eingeströmte Mediengemisch ein Beruhigungsbereich für die Abtrennung von Luft gebildet ist.

3. Einrichtung nach Anspruch 1 oder 2, **dadurch gekennzeichnet, dass** am oberen Ende der Kammer (27) eine Entlüftungsöffnung (45) für das Abströmen abgetrennter Luft aus der Kammer (27) vorhanden ist.

4. Einrichtung nach Anspruch 3, **dadurch gekennzeichnet, dass** die Entlüftungsöffnung (45) in einem am oberen Ende der Kammer (27) angeordneten Kammerdeckel (31) vorgesehen ist, an dem eine Filtereinrichtung (47) angeordnet ist, die von der Luft durchströmbar ist, die über die Entlüftungsöffnung austritt.

5. Einrichtung nach Anspruch 4, **dadurch gekennzeichnet, dass** am Kammerdeckel (31) eine als Grobfiltereinrichtung und als Spritzschutz dienende erste Filtereinrichtung (47) vorhanden ist.

6. Einrichtung nach Anspruch 5, **dadurch gekennzeichnet, dass** oberhalb der ersten Filtereinrichtung (47) eine eine feine Trennung von Flüssigkeit und austretender Luft bewirkende zweite Filtereinrichtung (51) vorhanden ist, deren Reinseite einen Luftaustritt zur Umgebung bildet.

7. Einrichtung nach einem der Ansprüche 1 bis 6, **dadurch gekennzeichnet, dass** sie mit ihrem Leitungssystem (1) Bestandteil des Kühlsystems einer Maschinenanlage ist.

8. Einrichtung nach den Ansprüchen 6 und 7, **dadurch gekennzeichnet, dass** die Maschinenanlage mindestens eine mit Sperrluft versorgte Drainageanordnung enthält und dass im Strömungsweg stromabwärts der zweiten Filtereinrichtung (51) ein Anschluss (53) vorgesehen ist, über den Sperrluft, die aus der Lageranordnung austritt, der zweiten Filtereinrichtung (51) zuführbar ist.

9. Einrichtung nach einem der Ansprüche 1 bis 8, **dadurch gekennzeichnet, dass** die Kammer (27) am Tank (7) derart angebaut ist, dass sie sich mit ihrem bodenseitigen Ausgang (29) durch die Tankdecke (35) ins Innere des Tanks (7) erstreckt.

10. Einrichtung nach den Ansprüchen 7 und 9, **dadurch gekennzeichnet, dass** auch weitere Komponenten des Kühlsystems, wie Pumpe (17) der Fördereinrichtung, Wärmetauscher (21), Anzeige- und Überwachungseinrichtungen (15), Anschlusseinrichtungen (3,9,23,25) und/oder dergleichen, auf dem Tank (7) angebaut und mit diesem zu einer Baueinheit vereinigt sind.

## Claims

1. A device for isolating gaseous components, in particular of air, from liquid operating media in fluid systems, comprising a line system (1) that has a storage tank (7) and a conveyor device (17) for discharging degassed operating medium from the tank (7) and for returning the media mixture containing gaseous components to the tank (7), a separating device (5) through which the media mixture delivered to the tank (7) can flow bringing about degassing, the separating device (5) having a chamber (27) for the media mixture which is arranged upstream of the tank (7), the chamber (27) having an outlet (29) on its bottom on which the degassed medium accumulates, which outlet is connected to the tank (7) by a siphon (37) which maintains a level of the degassed medium above the bottom-side outlet (29) in the chamber (27), the exit opening (39) of the siphon (37) opening out into a fluid-free space within the tank (7), and the maximum filling level (11) within the tank (7) lying below the exit opening (39), **characterised in that** the exit opening (39) is at a height that is offset upwardly by a predefinable distance with respect to the height of the edge of the outlet (29) on the bottom.

2. The device according to Claim 1, **characterised in that** the chamber (27) has an inlet (33) for the media mixture in its upper region opposite the outlet (29), and that the vertical extension of the chamber (27) is chosen so that a settling region for the separation of air is formed between the level of the degassed medium and the inlet (33) for the inflowing mixture.

3. The device according to Claim 1 or 2, **characterised in that** there is a ventilation opening (45) for the outflow of separated air from the chamber (27) at the upper end of the chamber (27).

4. The device according to Claim 3, **characterised in that** the ventilation opening (45) is provided in a chamber cover (31) disposed at the upper end of the chamber (27), on which chamber cover a filter device (47) is located through which the air passing out via the ventilation opening can flow.

5. The device according to Claim 4, **characterised in that** a first filter device (47) serving as a coarse filter device and as a splash guard is provided on the chamber cover (31).

6. The device according to Claim 5, **characterised in that** a second filter device (51) bringing about fine separation of liquid and air that is passing out is provided above the first filter device (47), the clean side of which second filter device forms an air outlet to the surrounding area.

7. The device according to any of Claims 1 to 6, **characterised in that** with its line system (1) it is a component of the cooling system of a machine installation.

8. The device according to Claims 6 and 7, **characterised in that** the machine installation contains at least one drainage system supplied with sealing air and that a port (53) is provided in the flow path upstream of the second filter device (51), by means of which port sealing air that is passing out of the storage arrangement can be delivered to the second filter device (51).

9. The device according to any of Claims 1 to 8, **characterised in that** the chamber (27) is mounted onto the tank (7) such that it extends with its bottom side outlet (29) through the tank cover (35) into the inside of the tank (7).

10. The device according to Claims 7 and 9, **characterised in that** further components of the cooling system, such as the pump (17) of the conveyance device, heat exchangers (21), display and monitoring devices (15), connection devices (3, 9, 23, 25) and/or the like are mounted on the tank and are combined with the latter to form one unit.

## Revendications

1. Dispositif pour séparer des constituants gazeux, notamment de l'air, de milieux de fonctionnement liquides dans des systèmes de fluide, comprenant un système (1) de conduite qui a un réservoir (7) et un dispositif (17) d'acheminement pour évacuer des milieux de fonctionnement dégazés du réservoir (7), et pour retourner au réservoir (7) un mélange de milieux contenant des constituant gazeux, un dispositif (5) de séparation, dans lequel peut passer un mélange de milieux envoyé au réservoir (7), provoquant un dégazage, le dispositif (5) de séparation ayant une chambre (27) pour le mélange de milieux, qui est disposé en amont du réservoir (7), dans lequel
la chambre (27) a, sur son fond ou s'accumule le milieu dégazé, une sortie (29) qui communique avec le réservoir (7) par un siphon (37) qui maintient, dans la chambre (27), un niveau du milieu dégazé au-dessus de la sortie (29) du côté du fond, l'embouchure (39) de sortie du siphon (37) débouchant dans un espace sans fluide à l'intérieur du réservoir (7), et dans lequel la hauteur (11) maximum du niveau dans le réservoir (7) est en dessous de l'embouchure (39) de sortie, **caractérisé en ce que** l'embouchure (39) de sortie se trouve à un niveau en hauteur qui, par rapport au niveau en hauteur du bord de la sortie (29) du côté du fond, est décalé vers le haut d'une étendue pouvant être donnée à l'avance.

2. Dispositif suivant la revendication 1, **caractérisé en ce que** la chambre (27) a, sur sa partie supérieure opposée à la sortie (29), une entrée (33) pour le mélange de milieux et **en ce que** l'étendue verticale de la chambre (27) est choisie de manière à former, entre le niveau du milieu dégazé et l'entrée (33) du mélange de milieux entrant, une zone de tranquillisation pour la séparation de l'air.

3. Dispositif suivant la revendication 1 ou 2, **caractérisé en ce qu'**il y a, à l'extrémité supérieure de la chambre (27), une ouverture (45) de purge pour l'air de la chambre (27) séparé du courant qui sort.

4. Dispositif suivant la revendication 3, **caractérisé en ce que** l'ouverture (45) de purge est prévue dans un couvercle (31) de la chambre, qui est mis à l'extrémité supérieure de la chambre (27) et sur lequel est monté un dispositif (47) de filtration dans lequel peut passer de l'air qui sort par l'ouverture de purge.

5. Dispositif suivant la revendication 4, **caractérisé en ce qu'**il y a, sur le couvercle (31) de la chambre, un premier dispositif (47) de filtration servant de dispositif de filtration grossier et de protection contre les projections.

6. Dispositif suivant la revendication 5, **caractérisé en ce qu'**il y a, au-dessus du premier dispositif (47) de filtration, un deuxième dispositif (51) de filtration, qui provoque une séparation fine du liquide et de l'air sortant et dont le côté propre forme une sortie de l'air à l'atmosphère.

7. Dispositif suivant l'une des revendications 1 à 6, **caractérisé en ce qu'**il fait partie, par son système (1) de conduite, du système de refroidissement d'une installation de machine.

8. Dispositif suivant les revendications 6 et 7, **caractérisé en ce que** l'installation de machine comporte au moins un dispositif de purge alimenté en air d'arrêt et **en ce qu'**il est prévu, dans le trajet d'écoulement en aval du deuxième dispositif (51) de filtration, un raccord (53) par lequel l'air d'arrêt, qui sort de l'agencement de palier, peut être envoyé au dispositif (51) de filtration.

9. Dispositif suivant l'une des revendications 1 à 8, **caractérisé en ce que** la chambre (27) est formée sur le réservoir (7) de manière à ce que, par sa sortie (29) du côté du fond, à travers le couvercle (35) du réservoir, elle s'étende à l'intérieur du réservoir (7).

10. Dispositif suivant les revendications 7 et 9, **caractérisé en ce qu'**également d'autres éléments du système de refroidissement, comme une pompe (17) du dispositif d'acheminement, un échangeur de chaleur (21), des dispositifs (15) d'indication et de contrôle, des dispositifs (3, 9, 23, 25) de raccordement et/ou analogues, sont mis sur le réservoir (7) et sont réunis à celui-ci en une unité de construction.
